# EUROPÄISCHE PATENTSCHRIFT

(11) **EP 1 572 772 B1**
(45) Veröffentlichungstag und Bekanntmachung des Hinweises auf die Patenterteilung: **06.09.2006**
(21) Anmeldenummer: 03789159.5
(22) Anmeldetag: 06.12.2003
(51) Int. Cl.: C08G 18/16, C08G 18/10, C09J 175/04

(54) **VERFAHREN ZUR HERSTELLUNG VON POLYURETHAN-PREPOLYMEREN IN GEGENWART EINES KATALYSATORS**
METHOD FOR PRODUCING POLYURETHANE PREPOLYMERS IN THE PRESENCE OF A CATALYST
PROCEDE DE PRODUCTION DE PREPOLYMERES DE POLYURETHANNE EN PRESENCE D'UN CATALYSEUR

(30) Priorität: 17.12.2002 DE 10259249
(43) Veröffentlichungstag der Anmeldung: 14.09.2005
(73) Patentinhaber: Henkel Kommanditgesellschaft auf Aktien, 40589 Düsseldorf (DE)
(72) Erfinder: BOLTE, Gerd, verstorben (DE); KOLLBACH, Guido, 47638 Straelen (DE); HASSEL, Nina, 47647 Kerken (DE); KINZELMANN, Hans-Georg, 50259 Pulheim (DE); STEIL, Oliver, 40470 Düsseldorf (DE)
(86) Internationale Anmeldenummer: PCT/EP2003/013848
(87) Internationale Veröffentlichungsnummer: WO 2004/055087

(56) Entgegenhaltungen:
- EP-A- 0 025 500
- DE-A- 2 330 175
- DE-A- 4 136 490
- US-A- 3 234 153

## Beschreibung

Die vorliegende Erfindung betrifft ein Verfahren zur Herstellung von Polyurethan-Prepolymeren mit endständigen Isocyanat-Gruppen durch Reaktion von Polyisocyanaten mit Polyolen in Gegenwart eines Katalysators, sowie die Verwendung der Polyurethan-Prepolymeren.

Die Reaktion zwischen Polyisocyanaten und Polyolen in Gegenwart eines Katalysators, z. B. einer Lewissäure oder Lewisbase, ist bekannt. Die WO 98/02303 beschreibt ein Verfahren für die beschleunigte Aushärtung von Laminaten, in dem eine Tinte zusammen mit einem Katalysator nahezu vollständig auf einen ersten Film aufgetragen wird und anschließend dieser erste Film unter zur Hilfenahme eines Klebstoffes gegen einen zweiten Film kaschiert wird. Die eingesetzten Klebstoffe können Ein-Komponenten (1 K)- oder Zwei-Komponenten (2K)-PolyurethanKlebstoffe sein. Bevorzugt eingesetzte Katalysatoren sind ε-Caprolactam, Polyethylenglykol und Dibutylzinndilaurat. Die nach diesem Verfahren hergestellten Filme zeichnen sich durch kürzere Alterungszeiten und geringe Amin-Migration aus. Die gemäß den Beispielen eingesetzten Klebstoffsysteme verfügen allerdings über eine hohe Viskosität, die durch die Aushärtung in Gegenwart des Katalysators weiter zunimmt.

Die DE-OS-2330175 beschreibt die Verwendung von Additionsverbindungen aus Lactamen und Hydroxylverbindungen und/oder Aminen und/oder Hydrazinen und/oder Oximen als Katalysatoren unter anderem bei der Kaschierung von Textilien mit Polyurethanen. Derartige Katalysatoren bewirken die Erzeugung von Schaumstoffen mit einer geschlossenen und porenfreien Oberfläche.

Die DE-OS-4136490 beschreibt Lösungsmittel freie, kurz nach der Herstellung niedrige Migrationswerte liefernde Beschichtungssysteme und Klebstoffsysteme aus Polyolen und Isocyanatgruppen enthaltenden Präpolymeren in einem Verhältnis der Isocyanatgruppen zu Hydroxylgruppen von 1,05 zu 1 bis 2,0 zu 1, wobei die Isocyanatgruppen enthaltenden Präpolymere aus Polyolgemischen der mittleren Funktionalität 2,05 bis 2,5 mit mindestens 90 Mol-% sekundären Hydroxylgruppen und Diisocyanaten mit unterschiedlich reaktiven Isocyanatgruppen in einem Verhältnis der Isocyanatgruppen und Hydroxylgruppen von 1,6 zu 1 bis 1,8 zu 1 aufgebaut sind.
Die Beschichtungs- und Klebstoffsysteme weisen eine niedrige Viskosität und gute Anfangsfestigkeit auf.

Die Aufgabe der vorliegenden Erfindung war es, Polyurethan-Prepolymere mit endständigen NCO-Gruppen und niedriger Viskosität zur Verfügung zu stellen, die mit verkürzten Reaktionszeiten herstellbar sind und ohne aufwendige Aufarbeitungsschritte einen niedrigen Gehalt an monomeren Polyisocyanaten aufweisen.

Die erfindungsgemäße Lösung der Aufgabe ist den Patentansprüchen zu entnehmen.
Sie besteht im wesentlichen in einem Verfahren zur Herstellung von Polyurethan-Prepolymeren mit endständigen Isocyanat-Gruppen, bei dem man Polyisocyanate mit Polyolen umsetzt, wobei man
a) als Polyisocyanat mindestens ein unsymmetrisches Diisocyanat einsetzt,
b) als Polyol mindestens ein Polyol mit einem durchschnittlichen Molekulargewicht (Mₙ) von 60 bis 3000 g/mol, bevorzugt 100 bis 2.000 g/mol und insbesondere bevorzugt 200 bis 1.200 g/mol einsetzt,
c) das Verhältnis Isocyanat-Gruppen zu Hydroxyl-Gruppen im Bereich zwischen 1,1:1 bis 4:1, bevorzugt 1,2:1 bis 2:1, insbesondere bevorzugt 1,3:1 bis 1,8:1 und ganz besonders bevorzugt 1,45:1 bis 1,75:1 einstellt,
   und
d) als Katalysator mindestens ein Carbonsäureamid zusetzt.

Überraschend und unerwartet wurde gefunden, dass beim Einsatz von Carbonsäureamid als Katalysator in der Reaktion von unsymmetrischem Diisocyanat mit Polyol die Reaktion selektiv verläuft, derart, dass die nach dem erfindungsgemäßen Verfahren hergestellten Polyurethan-Prepolymeren niedrige Viskositäten und einen niedrigen Gehalt an monomerem Polyisocyanat aufweisen.

Ohne sich auf diese Theorie beschränken zu wollen ist die Anmelderin der Ansicht, das Carbonsäureamide selektiv katalytisch die Reaktionsgeschwindigkeit von einer NCO-Gruppe in einem unsymmetrischem Diisocyanat begünstigen.

Die im weiteren Text auf polymere Verbindungen bezogenen Molekulargewichtsangaben beziehen sich, soweit nicht anders angegeben, auf das Zahlenmittel des Molekulargewichts (Mₙ). Alle Molekulargewichtsangaben beziehen sich, soweit nicht anders angegeben ist, auf Werte, wie sie durch Gelpermeationschromatographie (GPC) erhältlich sind.

Unter Polyisocyanaten werden Verbindungen verstanden, die zwei oder mehr Isocyanat-Gruppen enthalten. Bevorzugt handelt es sich bei den Polyisocyanaten um Verbindungen der allgemeinen Struktur O=C=N-X-N=C=O, wobei X ein aliphatischer, alicyclischer oder aromatischer Rest ist, vorzugsweise ein alicyclischer oder aromatischer Rest mit 4 bis 18 C-Atomen.
Das Polyisocyanat kann auch ein Polyurethan-Prepolymer mit endständigen NCO-Gruppen sein, wobei das Molekulargewicht (Mₙ) nicht mehr als 1.000 g/mol beträgt.

Typische Beispiele für geeignete Isocyanate sind 1,5-Naphthylendiisocyanat, 2,4- oder 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendlisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanato-ethylester, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat.

Aromatische Diisocyanate sind dadurch definiert, dass die Isocyanatgruppe direkt am Benzolring angeordnet ist. Insbesondere werden aromatische Diisocyanate eingesetzt wie 2,4-oder 4,4'-Diphenylmethandiisocyanat (MDI), die Isomeren des Toluylendiisocyanats (TDI), Naphthalin-1,5-diisocyanat (NDI).

Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat. Besonders geeignet sind: Tetramethylen-, Hexamethylen-, Undecan-, Dodecamethylen-, 2,2,4-Trimethylhexan-2,3,3-Trimethyl-hexamethylen-, 1,3-Cyclohexan-, 1,4-Cyclohexan-, 1,3- bzw. 1,4-Tetramethylxylol-, Isophoron-, 4,4-Dicyclohexylmethan-, Tetramethylxylylen-(TMXDI) und Lysinesterdiisocyanat.

Als mindestens trifunktionelle Isocyanate geeignet sind Polyisocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen. Aus der Gruppe der aromatischen Polyisocyanate ist beispielsweise Methylentriphenyltriisocyanat (MIT) geeignet.

Zur Herstellung von Trimeren geeignete Isocyanate sind die bereits oben genannten Diisocyanate, wobei die Trimerisierungsprodukte der Isocyanate HDI, MDI oder IPDI besonders bevorzugt sind.

Weiterhin geeignet sind blockierte, reversibel verkappte Polykisisocyanate wie 1,3,5-Tris[6-(1-methyl-propyliden-aminoxycarbonyl-amino)-hexyl]-2,4,6-trixo-hexahydro-1,3,5-triazin.

Ebenfalls zum Einsatz geeignet sind die polymeren Isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.
Im Rahmen einer bevorzugten Ausführungform der Erfindung wird beispielsweise Desmodur N 3300, Desmodur N 100 oder das IPDI-trimere Isocyanurat T 1890 (Hersteller: Bayer AG) eingesetzt.

Bei der Auswahl der Polyisocyanate ist zu beachten, dass die NCO-Gruppen mindestens eines Polyisocyanates unterschiedliche Reaktivität gegenüber mit Isocyanaten reaktive funktionelle Gruppen tragende Verbindungen besitzen. Dies trifft insbesondere auf Diisocyanate mit NCO-Gruppen in unterschiedlicher chemischer Umgebung, also auf unsymmetrische Diisocyanate zu.

Der Begriff "Polyol" umfaßt im Rahmen des vorliegenden Textes ein einzelnes Polyol oder ein Gemisch von zwei oder mehr Polyolen, die zur Herstellung von Polyurethanen herangezogen werden können. Unter einem Poylol wird ein polyfunktioneller Alkohol verstanden, d. h. eine Verbindung mit mehr als einer OH-Gruppe im Molekül. Das Polyol kann ein Polyetherpolyol, Polyesterpolyol oder ein Polyetheresterpolyol sein.

Einsetzbare Polyole sind beispielsweise aliphatische Alkohole mit 2 bis 4 OH-Gruppen pro Molekül. Die OH-Gruppen können sowohl primär als auch sekundär sein.
Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben. Ebenfalls geeignet sind höherfunktionelle Alkohole wie beispielsweise Glycerin, Trimethylolpropan, Pentaerythrit sowie oligomere Ether der genannten Substanzen mit sich selbst oder im Gemisch aus zwei oder mehr der genannten Ether untereinander.
Weiterhin können als Polyolkomponente Umsetzungsprodukte niedermolekularer polyfunktioneller Alkohole mit Alkylenoxiden, sogenannte Polyether, eingesetzt werden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet.
So können - je nach gewünschtem Molekulargewicht - Anlagerungsprodukte von nur wenigen Mol Ethylenoxid und/oder Propylenoxid pro Mol oder aber von mehr als hundert Mol Ethylenoxid und/oder Propylenoxid an niedermolekulare mehrfunktionelle Alkohole eingesetzt werden. Weitere Polyetherpolyole sind durch Kondensation von z.B. Glycerin oder Pentaerythrit unter Wasserabspaltung herstellbar.

In der Polyurethan-Chemie gebräuchliche Polyole entstehen weiterhin durch Polymerisation von Tetrahydrofuran.
Unter den genannten Polyetherpolyolen sind die Umsetzungsprodukte von mehrfunktionellen niedermolekularen Alkoholen mit Propylenoxid unter Bedingungen, bei denen zumindest teilweise sekundäre Hydroxylgruppen entstehen, insbesondere für die erste Synthese-Stufe besonders geeignet.
Die Polyether werden in dem Fachmann bekannter Weise durch Umsetzung der Startverbindung mit einem reaktiven Wasserstoffatom mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon, umgesetzt.
Geeignete Startverbindungen sind beispielsweise Wasser, Ethylenglykol, Propylenglykol-1,2 oder -1,3, Butylenglykol-1,4 oder -1,3, Hexandiol-1,6, Octandiol-1,8, Neopentylglykol, 1,4-Hydroxymethylcyclohexan, 2-Methyl-1,3-propandiol, Glycerin, Trimethylolpropan, Hexantriol-1,2,6, Butantriol-1,2,4 Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen, oder Gemische aus zwei oder mehr davon.

Ebenfalls zum Einsatz als Polyolkomponente geeignet sind Polyether, die durch Vinylpolymere modifiziert wurden. Derartige Produkte sind beispielsweise erhältlich, in dem Styrol- oder Acrylnitril, oder deren Gemisch, in der Gegenwart von Polyethern polymerisiert werden.

Zur Herstellung des Polyurethan-Prepolymeren mit endständigen Isocyanat-Gruppen sind ebenfalls Polyesterpolyole geeignet.
So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden.
Im Rahmen der Erfindung besonders geeignet sind Polyesterpolyole aus mindestens einer der genannten Dicarbonsäuren und Glycerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon.

Besonders geeignete Säuren sind Isophthalsäure oder Adipinsäure oder deren Gemisch. Polyesterpolyole mit hohem Molekulargewicht können in der zweite Synthese-Stufe eingesetzt werden und umfassen beispielsweise die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.
Die Polyester können gegebenenfalls einen geringen Anteil an Carboxylendgruppen aufweisen. Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, können ebenfalls eingesetzt werden.
Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.
Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden.

Weiterhin als Polyole geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Ebenfalls als Polyolkomponente geeignet sind OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Insbesondere bevorzugt wird im erfindungsgemäßen Verfahren als Diisocyanat mindestens ein unsymmetrisches Diisocyanat eingesetzt.
Das unsymmetrische Diisocyanat wird aus der Gruppe der aromatischen, aliphatischen oder cycloaliphatischen Diisocyanate ausgewählt.
Beispiele für geeignete aromatische Diisocyanate mit unterschiedlich reaktiven NCO-Gruppen sind alle Isomeren des Toluylendiisocyanats (TDI) entweder in isomerenreiner Form oder als Mischung mehrerer Isomerer, Naphthalin-1,5-diisocyanat (NDI) und 1,3-Phenylendiisocyanat.
Beispiele für aliphatische Diisocyanate mit unterschiedlich reaktiven NCO-Gruppen sind 1,6-Diisocyanato-2,2,4-trimethylhexan, 1,6-Diisocyanato-2,4,4-trimethylhexan und Lysindiisocyanat.
Beispiele für geeignete cycloaliphatische Diisocyanate mit unterschiedlich reaktiven NCO-Gruppen sind z.B. 1-Isocyanatomethyl-3-isocyanato-1,5,5-trimethylcyclohexan (Isophorondiisocyanat, IPDI) und 1-Methyl-2,4-diisocyanatocyclohexan.

Besonders bevorzugt wird mindestens ein unsymmetrisches Diisocyanat aus der Gruppe des Toluylendiisocyanats (TDI), entweder in isomerenreiner Form oder als Mischung mehrerer Isomerer; 1-Isocyanatomethyl-3-isocyanato-1,5,5-trimethyldiisocyanat (Isophorondiisocyanat, IPDI); 2,4-Diphenylmethandiisocyanat, eingesetzt.

Als Polyol wird mindestens ein Polyol mit einem durchschnittlichen Molekulargewicht (Mₙ) von 60 bis 3000 g/mol, bevorzugt 100 bis 2.000 g/mol und insbesondere bevorzugt 200 bis 1.200 g/mol, einsetzt.

Bevorzugt wird mindestens ein Polyetherpolyol mit einem Molekulargewicht (Mₙ) von 100 bis 3.000 g/mol, bevorzugt 150 bis 2.000 g/mol, und /oder mindestens ein Polyesterpolyol mit einem Molekulargewicht von 100 bis 3.000 g/mol, bevorzugt 250 bis 2.500 g/mol, eingesetzt.

In einer bevorzugten Ausführungsform wird mindestens ein Polyol eingesetzt, welches unterschiedlich reaktive Hydroxyl-Gruppen besitzt.
Ein Unterschied in der Reaktivität liegt beispielsweise zwischen primären und sekundären Hydroxyl-Gruppen vor.

Konkrete Beispiele für die erfindungsgemäß zu verwendenden Polyole sind 1,2-Propandiol, 1,2-Butandiol, Dipropylenglycol, Tripropylenglycol, Tetrapropylenglykol, die höheren Homologen des Polypropylenglykols mit einem durchschnittlichen Molekulargewicht (Zahlenmittel Mₙ) von bis 3.000, insbesondere bis 2.500 g/mol, sowie Copolymere des Polypropylenglykols, beispielsweise Block- oder statistische Copolymere aus Ethylen- und Propylenoxid.

In dem erfindungsgemäßen Verfahren stellt man das Verhältnis Isocyanat-Gruppen zu Hydroxyl-Gruppen im Bereich zwischen 1,1:1 bis 4:1, bevorzugt 1,2:1 bis 2:1, und insbesondere bevorzugt 1,3:1 bis 1,8:1 ein. In einer bevorzugten Ausführungsform der Erfindung beträgt das Verhältnis Isocyanat-Gruppen zu Hydroxyl-Gruppen 1,45:1 bis 1,75:1.

Die Reaktion zwischen dem mindestens einen unsymmetrischem Diisocyanat und dem mindestens einen Polyol mit einem durchschnittlichen Molekulargewicht (Mₙ) von 60 bis 3000 g/mol erfolgt bei einer Temperatur zwischen 20 °C bis 80 °C, bevorzugt zwischen 40 bis 75 °C. In einer besonderen Ausführungsform erfolgt die Umsetzung bei Raumtemperatur.

In einer besonderen Ausführungsform der Erfindung erfolgt die Reaktion in aprotischen Lösemitteln. Der gewichtsmäßige Anteil des Reaktionsgemisches in der Mischung mit dem aprotischen Lösemittel liegt bei 20 bis 80 Gew.-%, bevorzugt 30 bis 60 Gew.-%, insbesondere bevorzugt bei 35 bis 50 Gew.-%.

Die Umsetzung in den aprotischen Lösemitteln erfolgt bei Temperaturen im Bereich von 20 °C bis 100 °C, bevorzugt 25 °C bis 80 °C und insbesondere bevorzugt von 40°C bis 75 °C. Unter aprotischen Lösemitteln sind beispielsweise halogenhaltige organische Lösemittel zu verstehen, bevorzugt werden aber Aceton, Methylisobutylketon oder Ethylacetat.

Die Reaktion zwischen dem mindestens einen unsymmetrischem Diisocyanat und dem mindestens einen Polyol mit einem durchschnittlichen Molekulargewicht (Mₙ) von 60 bis 3000 g/mol zu Polyurethan-Prepolymeren mit endständigen Isocyanat-Gruppen wird in Gegenwart von mindestens einem Carbonsäureamid als Katalysator durchgeführt.

Bevorzugt einsetzbare Carbonsäureamide weisen die folgende allgemeine Formel (I) und/oder (II) auf: 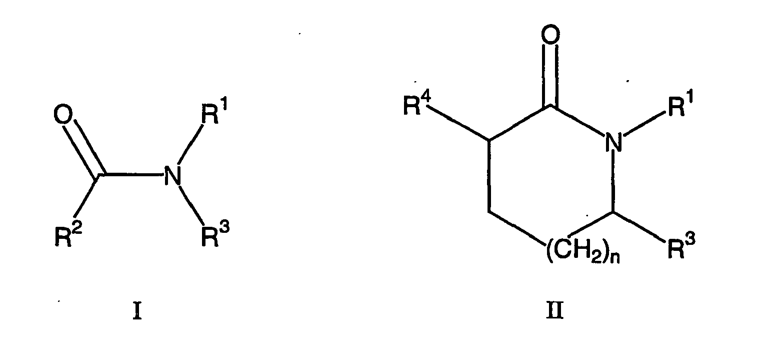 mit
- R¹, R³, R⁴=: H, linearer oder verzweigter, gesättigter oder ungesättigter C₁-C₁₈₋Alkylrest; C₅-C₈-Cycloalky, C₆-C₁₀-Aryl, C₇-C₁₂-Aralkyl; wobei die Gruppen R¹, R³ und R⁴ gleich oder verschieden voneinander sein können,
- R² =: linearer oder verzweigter, gesättigter oder ungesättigter C₁-C₁₈₋Alkylrest; C₅-C₈-Cycloalky, C₆-C₁₀-Aryl, C₇-C₁₂-Aralkyl,
- n =: 1 bis 3.

Insbesondere werden die folgenden Carbonsäureamide als Katalysator eingesetzt:
Essigsäureamid, Essigsäure-N-methylamid, Essigsäure-N,N'-dimethylamid, Propionsäure-N-ethylamid, Benzoesäure-N-methylamid, Benzoesäureamid (Benzamid), N-Methyl-ε-Caprolactam, 3-Ethyl-ε-Caprolactam, 3-Methyl-ε-Caprolactam, ε-Caprolactam, 7-Phenyl-ε-Caprolactam, 6-Aminohexen(-2)-säurelactam, 7-Aminoheptansäure-lactam, omega-Capryllactam, delta-Valerolactam (2-Piperidinon), gamma-Butyrolactam.
Bevorzugt wird Essigsäuremethylamid, Benzoesäure-N-methylamid und/oder Benzoesäureamid als Katalysator eingesetzt.

Insbesondere bevorzugt weisen die Carbonsäureamide eine cyclische Struktur auf. Unter den cyclischen Carbonsäureamiden sind Lactame oder Lactamderivate bevorzugt.
Prinzipiell sind keine Begrenzungen hinsichtlich des Lactams bekannt. Bevorzugt kommen Lactame von C₄-C₂₀-omega-Carbonsäuren in Betracht, insbesondere 4-Aminobutansäurelactam, 5-Aminopentansäurelactam, 6-Aminohexansäurelactam ("ε-Caprolactam"), 7-Aminoheptansäurelactam oder 8-Aminooctansäurelactam. Diese Lactame können substituiert sein, beispielsweise durch C1-C4-Alkylgruppen, Halogene, wie Fluor, Chlor oder Brom, C1-C4-Alkoxygruppen oder C1-C4-Carboxygruppen, vorzugsweise sind die Lactame nicht substituiert.

Carbonsäureamide sind beispielsweise erhältlich durch Umsetzung von Carbonsäurederivaten mit Ammoniak bzw. Aminen.
Als Ausgangsverbindungen für die Herstellung der erfindungsgemäß zu verwendenden Katalysatoren kommen besonders Lactame von omega-Aminocarbonsäuren in Betracht, wie 3-Aminopropionsäure, 4-Aminobuttersäure, 5-Aminovaleriansäure, 6-Aminocapronsäure, 10-Aminocaprinsäure; N-substituierte Azalactame wie 1-N-Methylhexahydro-1,4-diazepinon-(3), 1-N-Butylhexahydro-1,4-diazepinon-(3), 1-N-Benzyl-hexahydro-1,4-diazepinon-(3), 1-N-alpha-Pyridyl-hexahydro-1,4-diazepinon-(3) usw. Bevorzugte Lactame sind Butyrolactam, Valerolactam, 1-N-Methylhexa-hydro-1,4-diazepinon-(3) und insbesondere ε-Caprolactam.
In einer besonderen bevorzugten Ausführungsform der Erfindung wird als Katalysator ε- Caprolactam eingesetzt.

Bezogen auf die Geamtmenge an eingesetztem Polyisocyanat und Polyol beträgt die Menge an eingesetztem Carbonsäureamid 0,05 bis 6 Gew.-%, bevorzugt 0,1 bis 3 Gew.-%, insbesondere bevorzugt 0,2 bis 0,8 Gew.-%.

Dem nach dem erfindungsgemäßen Verfahren hergestellten Polyurethan-Prepolymeren mit endständigen Isocyanat-Gruppen kann in einer zweiten Synthese-Stufe weiteres Polyol zugeben werden. Das weitere Polyol kann ein Polyetherpolyol, Polyesterpolyol oder Polyetheresterpolyol oder ein Gemisch der genannten Polyole sein. Das Polyol weist ein Molekulargewicht (Mₙ) von etwa 100 bis 10.000 g/mol, vorzugsweise von etwa 200 bis etwa 5.000 g/mol auf.

Außer den bisher genannten Polyolen können zusätzlich noch weitere, mit gegenüber Isocyanaten reaktionsfähige funktionelle Gruppen tragende Verbindungen zur Herstellung des Polyurethan-Prepolymeren eingesetzt werden, beispielsweise Amine aber auch Wasser. Weiter seien konkret genannt:
- Bernsteinsäure-di-2-hydroxyethylamid, Bernsteinsäuredi-N-methyl-(2-hydroxyethyl)amid, 1,4-Di(2-hydroxymethylmercapto)-2,3,5,6-tetrachlorbenzol, 2-Methylen-propandiol-(1,3), 2-Methylpropandiol-(1,3), 3-Pyrrolidino-1,2-propandiol, 2-Methylenpentandiol-2,4, 3-Alkoxy-1,2-propandiol, 2-Ethylhexan-1,3-diol, 2,2-Dimethylpropandiol-1,3, 1,5-Pentandiol, 2,5-Dimethyl-2,5-hexandiol, 3-Phenoxy-1,2-propandiol, 3-Benzyloxy-1,2-propandiol, 2,3-Dimethyl-2,3-butandiol, 3-(4-Methoxyphenoxy)-1,2-propandiol und Hydroxymethylbenzylalkohol;
- aliphatische, cycloaliphatische und aromatische Diamine wie Ethylendiamin, Hexamethylendiamin, 1,4-Cyclohexylendiamin, Piperazin, N-Methylpropylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan, Aminodiphenylamin oder die Isomeren des Phenylendiamins;
- weiterhin auch Carbohydrazide oder Hydrazide von Dicarbonsäuren;
- Aminoalkohole wie Ethanolamin, Propanolamin, Butanolamin, N-Methylethanolamin, N-Methyl-isopropanolamin, Diethanolamin, Triethanolamin sowie höhere Di- oder Tri(alkanolamine);
- aliphatische, cycloaliphatische, aromatische und heterozyklische Mono- und Diaminocarbonsäuren wie Glycin, 1- und 2-Alanin, 6-Aminocapronsäure, 4-Aminobuttersäure, die isomeren Mono- und Diaminobenzoesäuren sowie die isomeren Mono- und Diaminonaphthoesäuren.

Weiterhin kann das Polyurethan-Prepolymere mit endständigen Isocyanat-Gruppen ggf. zusätzlich Stabilisatoren, haftvermittelnde Zusätze wie klebrigmachende Harze, Füllstoffe, Pigmente, Weichmacher und/oder Lösemittel enthalten.

Als "Stabilisatoren" im Sinne dieser Erfindung sind einerseits Stabilisatoren zu verstehen, die eine Viskositätsstabilität des erfindungsgemäßen Polyurethans während der Herstellung, Lagerung bzw. Applikation bewirken. Hierfür sind z.B. monofunktionelle Carbonsäurechloride, monofunktionelle hochreaktive Isocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten des erfindungsgemäßen Polyurethans und zum anderen nach den Applikationsbedingungen sowie den zu erwartenden Belastungen des ausgehärteten Produktes. Wenn das erfindungsgemäße monomerenarme Polyurethan überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile des Polyurethan-Prepolymeren mit endständigen Isocyanat-Gruppen aus Polyesterbausteinen, können Hydrolyse-Stabilisatoren, z.B. vom Carbodiimid-Typ, eingesetzt werden.

Werden die nach dem erfindungsgemäßen Verfahren hergestellten Polyurethan-Prepolymeren mit endständigen NCO-Gruppen in Kaschierklebstoffen eingesetzt, so können diese noch klebrigmachende Harze, wie z.B. Abietinsäure, Abietinsäureester, Terpenharze, Terpenphenolharze oder Kohlenwasserstoffharze sowie Füllstoffe (z.B. Silikate, Talk, Calciumcarbonate, Tone oder Ruß), Weichmacher (z.B. Phthalate) oder Thixotropiermittel (z.B. Bentone, pyrogene Kieselsäuren, Harnstoffderivate, fibrillierte oder Pulp-Kurzfasern) oder Farbpasten bzw. Pigmente enthalten.
Außerdem können in diesem Falle die nach dem erfindungsgemäßen Verfahren hergestellte Polyurethan-Prepolymeren auch in Lösung hergestellt und als 1 K oder 2K Kaschierklebstoff eingesetzt werden, vorzugsweise in polaren, aprotischen Lösemitteln. Die bevorzugten Lösemittel haben dabei einen Siedebereich von etwa 50°C bis 140°C. Obwohl auch halogenierte Kohlenwasserstoffe geeignet sind, werden ganz besonders Ethylacetat, Methylethylketon (MEK) oder Aceton bevorzugt.

In einer besonderen Ausführungsform des erfindungsgemäßen Verfahrens setzt man in einer zweiten oder einer weiteren Synthese-Stufe weitere Polyisocyanate, insbesondere Diisocyanate, bevorzugt aber Triisocyanate ein. Dies kann in Kombination mit dem Polyol oder auch durch alleinige Zugabe des Diisocyanates/Triisocyanates geschehen. Als Triisocyanat bevorzugt sind Addukte aus Diisocyanaten und niedermolekularen Triolen, insbesondere die Addukte aus aromatischen Diisocyanaten und Triolen, wie z. B. Trimethylolpropan oder Glycerin.
Auch aliphatische Triisocyanate wie zum Beispiel das Biuretisierungsprodukt des Hexamethylendiisocyanates (HDI) oder das Isocyanuratisierungsprodukt des HDI oder auch die gleichen Trimerisierungsprodukte des Isophorondiisocyanats (IPDI) sind für die erfindungsgemäßen Zusammensetzungen geeignet, sofern der Anteil an Diisocyanaten <1 Gew.-% beträgt und der Anteil an tetra- bzw. höherfunktionellen Isocyanaten nicht größer als 25 Gew.-% ist.
Wegen ihrer guten Verfügbarkeit sind dabei die vorgenannten Trimerisierungsprodukte des HDI und des IPDI besonders bevorzugt.
Das weitere Polyisocyanat kann bei einer Temperatur von 25 °C bis 100 °C zugegeben werden.

Das nach dem erfindungsgemäßen Verfahren hergestellte Polyurethan-Prepolymere mit endständigen Isocyanat-Gruppen ist monomerenarm.
Unter "monomerenarm" ist eine niedrige Konzentration der Ausgangs-Polyisocyanate im erfindungsgemäß hergestellten Polyurethan-Prepolymeren zu verstehen.
Die Monomerenkonzentration liegt unter 1, vorzugsweise unter 0,5, insbesondere unter 0,3 und insbesondere bevorzugt unter 0,1 Gew.-%, bezogen auf das Gesamtgewicht des lösemittelfreien Polyurethan-Prepolymeren.

Der Gewichtsanteil des monomeren Diisocyanates wird gaschromatografisch, mittels Hochdruckflüssigkeitschromatografie (HPLC) oder mittels Gelpermeationschromatografie (GPC) bestimmt.

Die Viskosität des nach dem erfindungsgemäßen Verfahren hergestellten Polyurethan-Prepolymeren beträgt bei 100 °C 100 mPas bis 15.000 mPas, bevorzugt 150 mPas bis 12.000 mPas und insbesondere bevorzugt 200 bis 10.000 mPas. gemessen nach Brookfield (ISO 2555).

In einer besonders bevorzugten Ausführungsform der Erfindung beträgt die Viskosität der erfindungsgemäß hergestellten Polyurethan-Prepolymeren 4000 mPas bis 9000 mPas bei 40°C, gemessen nach Brookfield (ISO 2555).

Der NCO-Gehalt im erfindungsgemäß hergestellten Polyurethan-Prepolymeren beträgt 1 Gew.-% bis 10 Gew.-%, bevorzugt 2 Gew.-% bis 8 Gew.-% und insbesondere bevorzugt 2,2 Gew.-% bis 6 Gew.-% (nach Spiegelberger, EN ISO 11909).

Die erfindungsgemäß hergestellten Polyurethan-Prepolymeren zeichnen sich insbesondere durch einen extrem niedrigen Anteil an arbeitshygienisch bedenklichen monomeren leichtflüchtigen Diisocyanaten mit einem Molekulargewicht unterhalb von 500 g/mol aus. Das Verfahren hat den wirtschaftlichen Vorteil, daß die Monomerenarmut ohne aufwendige und kostspielige Arbeitsschritte erzielt wird. Die so hergestellten Polyurethan-Prepolymeren sind darüberhinaus frei von den üblicherweise bei thermischen Entmonomerisierungs-Aufarbeitungsschritten anfallenden Nebenprodukten wie Vernetzungs- oder Depolymerisationsprodukten. Durch das erfindungsgemäße Verfahren werden kürzere Reaktionszeiten erzielt, trotzdem bleibt die Selektivität insbesondere zwischen den unterschiedlich reaktiven NCO-Gruppen eines unsymmetrischen Diisocyanats soweit bestehen, das Polyurethan-Prepolymere mit niedrigen Viskositäten erhalten werden.

Die erfindungsgemäß hergestellten Polyurethan-Prepolymeren eignen sich in Substanz oder als Lösung in organischen Lösemitteln, bevorzugt als Klebstoff oder Dichtstoff oder Klebstoff- oder Dichtstoff Komponente zum Verkleben von Kunststoffen, Metallen und Papieren oder als monomerenarmer niedrigviskoser Synthesebaustein zum Aufbau von Polyurethan-Prepolymeren. Aufgrund des extrem niedrigen Anteils an migrationsfähigen monomeren Diisocyanaten eignen sich die erfindungsgemäß hergestellten Polyurethan-Prepolymeren insbesondere zum Kaschieren von Textilien, Aluminium und Kunststoff-Folien sowie Metall- bzw. Oxid-bedampften Folien und Papieren. Hierbei können übliche Härter, etwa mehrfunktionelle höhermolekulare Polyole zugesetzt werden (Zweikomponentensysteme) oder aber Oberflächen mit definiertem Feuchtigkeitsgehalt mit den erfindungsgemäß hergestellten Produkten direkt verklebt werden.
Folienverbunde, hergestellt auf Basis der erfindungsgemäß hergestellten Polyurethan-Prepolymeren zeigen hohe Verarbeitungssicherheit beim Heißsiegeln. Dies ist auf dem stark vermindertem Anteil migrationsfähiger niedermolekularer Produkte in dem Polyurethan zurückzuführen. Desweiteren können die erfindungsgemäß hergestellten NCO-Gruppen enthaltenden monomerenarmen Polyurethan-Prepolymeren auch in Extrusions-, Druck- und Metallisierungsprimern sowie zur Heißsiegelung verwendet werden. Des weiteren eignen sich die erfindungsgemäß hergestellten Polyurethane zur Herstellung von Hart-, Weich-, Integralschäumen sowie in Dichtstoffen.

Die Erfindung wird nun an Hand von Beispielen im einzelnen erläutert.

### Beispiele:

### Beispiel 1:

| Einwaage | | |
|---|---|---|
| 630,32 g | Polyetherpolyol 1 | (OHZ: 108) |
| 207,60 g | TDI | (NCO: 48,2 %) |
| 157,08 g | Polyetherpolyol 2 | (OHZ: 53) |
| 5,00 g | Katalysator | |
| | (ε-Caprolactam) | |

### Ausführung:

- Apparatur:: Dreihalskolben-Rührapparatur mit Kontaktthermometer, Rührer mit Rührmotor, Trockenrohr und Heizpilz.

### Durchführung:

Das Polyetherpolyol 1 wird vorgelegt und mit dem Katalysator (ε-Caprolactam) versetzt. Anschließend erfolgt die Zugabe von TDI. Nach Abklingen der Exothermie wird der Ansatz noch solange bei ca. 70-80 °C gerührt, bis der Endpunkt der 1. Stufe erreicht ist.

Endpunkt der 1. Stufe: 5,8 Gew.-% NCO im Polyurethan-Prepolymeren.
Anschließend wird Polyetherpolyol 2 zugegeben. Die Reaktionsmischung wird erneut bei ca. 70-80 °C gerührt.

Endpunkt der 2. Stufe: 4,0 Gew.-% im Polyurethan-Prepolymeren.
Die Gesamtreaktionszeit für die erste und zweite Stufe zur Herstellung des Polyurethan-Prepolymeren beträgt 3 Stunden.

| | |
|---|---|
| NCO-Wert: | 4,0 Gew.-% |
| Viskosität : | 4000-6000 mPa s |
| (Brookfield, Typ RVT; Spindel 27; 50 UpM; 40°C) | |
| TDI-Monomergehalt: | 0,03 Gew.-% |

### Beispiel 2

| Einwaage | | |
|---|---|---|
| 630,32 g | Polyetherpolyol 1 | (OHZ: 105) |
| 207,60 g | TDI | (NCO: 48,2 %) |
| 157,08 g | Polyetherpolyol 2 | (OHZ: 53) |
| 5,00 g | Katalysator (Benzamid) | |

### Ausführung:

- Apparatur:: Dreihalsrundkolben-Rührapparatur mit Kontaktthermometer, Rührer mit Rührmotor, Trockenrohr und Heizpilz

### Durchführung:

Das Polyetherpolyol 1 wird vorgelegt und mit dem Katalysator versetzt. Nach vollständigem lösen des Katalysators wird TDI zugegeben. Nach Abklingen der Exothermie wird der Ansatz noch so lange bei 70 - 80 °C gerührt, bis der Endpunkt der 1. Stufe erreicht ist.

Endpunkt 1. Stufe: 5,8 Gew.-% NCO im Polyurethan-Prepolymeren
(Theorie: 6,0 Gew.-%)
Anschließend wird Polyetherpolyol 2 zugegeben. Die Reaktionsmischung wird erneut bei ca. 70 - 80°C gerührt.
Endpunkt der 2. Stufe: 3,6 Gew.-% NCO im Polyurethan-Prepolymeren.
(Theorie: 4,4 Gew.-%)
Die Gesamtreaktionszeit für die erste und zweite Stufe zur Herstellung des Polyurethan-Prepolymeren beträgt 6 Stunden.

| | |
|---|---|
| NCO-Wert: | 3,6 Gew.-% |
| Viskosität: | 7500 - 8500 mPa s |
| (Brookfield, Typ RVT; Spindel 27; 50UpM; 40°C) | |
| TDI-Monomergehalt: | < 0,01 Gew. % |

### Beispiel 3: (nicht erfindungsgemäß)

| Einwaage | | |
|---|---|---|
| 631,38 g | Polyetherpolyol 1 | (OHZ: 108) |
| 188,97 g | TDI | (NCO: 48,2 %) |
| 176,65 g | Polyetherpolyol 2 | (OHZ: 53) |
| 3,00 g | Katalysator | |
| | (DABCO) | |

### Ausführung:

- Apparatur:: Dreihalskolben-Rührapparatur mit Kontaktthermometer, Rührer mit Rührmotor, Trockenrohr und Heizpilz.

### Durchführung:

Das Polyetherpolyol 1 wird vorgelegt und mit Katalysator (DABCO) versetzt. Anschließend erfolgt die Zugabe von TDI. Nach Abklingen der Exothermie wird der Ansatz noch solange bei ca. 70-80 °C gerührt, bis der Endpunkt der 1. Stufe erreicht ist.

Endpunkt der 1. Stufe: 5,5 Gew.-% NCO im Polyurethan-Prepolymeren.
Anschließend wird Polyetherpolyol 2 zugegeben. Die Reaktionsmischung wird erneut bei ca. 70-80 °C gerührt.

Endpunkt der 2. Stufe: 3,9 Gew.-% NCO im Polyurethan-Prepolymeren.
Die Gesamtreaktionszeit für die erste und zweite Stufe zur Herstellung des Polyurethan-Prepolymeren beträgt 3 Stunden.

| | |
|---|---|
| NCO-Wert: | 3,5 Gew.-% |
| Viskosität: | 28.000-32.000 mPa s |
| (Brookfield, Typ RVT; Spindel 27; 50 UpM;40°C) | |
| TDI-Monomergehalt: | 0,03 Gew.-% |

### Beispiel 4 (nicht erfindungsgemäß)

| Einwaage | | |
|---|---|---|
| 631,38 g | Polyetherpolyol 1 | (OHZ: 108) |
| 188,97 g | TDI | (NCO: 48,2 %) |
| 176,65 g | Polyetherpolyol 2 | (OHZ: 53) |

### Ausführung

- Apparatur:: Dreihalskolben-Rührapparatur mit Kontaktthermometer, Rührer mit Rührmotor, Trockenrohr und Heizpilz.

### Durchführung:

Das Polyetherpolyol 1 wird vorgelegt. Anschließend erfolgt die Zugabe von TDI. Nach Abklingen der Exothermie wird der Ansatz noch solange bei ca. 70-80 °C gerührt, bis der Endpunkt der 1. Stufe erreicht ist.

Endpunkt der 1. Stufe: 7,1 Gew.-% NCO im Polyurethan-Prepolymeren.

Anschließend wird Polyetherpolyol 2 zugegeben. Die Reaktionsmischung wird erneut bei ca. 70-80 °C gerührt.

Endpunkt der 2. Stufe: 4,8 Gew.-% NCO im Polyurethan-Prepolymeren.
Die Gesamtreaktionszeit für die erste und zweite Stufe zur Herstellung des Polyurethan-Prepolymeren beträgt 5 Stunden.

| | |
|---|---|
| NCO-Wert: | 4,8 Gew.-% |
| Viskosität: | 3250 mPa s |
| (Brookfield, Typ RVT; Spindel 27; 50 UpM;40°C) | |
| TDI-Monomergehalt: | 0,55 Gew.-% |

## Patentansprüche

1. Verfahren zur Herstellung von Polyurethan-Prepolymeren mit endständigen Isocyanat-Gruppen
bei dem man Polyisocyanate mit Polyolen umsetzt,
**dadurch gekennzeichnet, dass** man
a) als Polyisocyanat mindestens ein unsymmetrisches Diisocyanat einsetzt,
b) als Polyol mindestens ein Polyol mit einem durchschnittlichen Molekulargewicht (Mₙ) von 60 bis 3000 g/mol, bevorzugt 100 bis 2.000 g/mol und insbesondere bevorzugt 200 bis 1.200 g/mol einsetzt,
c) das Verhältnis Isocyanat-Gruppen zu Hydroxyl-Gruppen im Bereich zwischen 1,1:1 bis 4:1, bevorzugt 1,2:1 bis 2:1, insbesondere bevorzugt 1,3:1 bis 1,8:1 und ganz besonders bevorzugt 1,45:1 bis 1,75:1 einstellt,
und
d) als Katalysator mindestens ein Carbonsäureamid zusetzt.

2. Verfahren nach Anspruch 1, **dadurch gekennzeichnet, dass** man als Polyisocyanat mindestens ein unsymmetrisches Diisocyanat aus der Gruppe des Toluylendiisocyanats (TDI), entweder in isomerenreiner Form oder als Mischung mehrerer Isomerer; 1 -Isocyanatomethyl-3-isocyanato-1,5,5-trimethyldiisocyanat (Isophorondiisocyanat, IPDI); 2,4-Diphenylmethandiisocyanat, einsetzt.

3. Verfahren nach Anspruch 1 oder 2, **dadurch gekennzeichnet, dass** man ein Carbonsäureamid der allgemeinen Formel I und/oder II einsetzt: 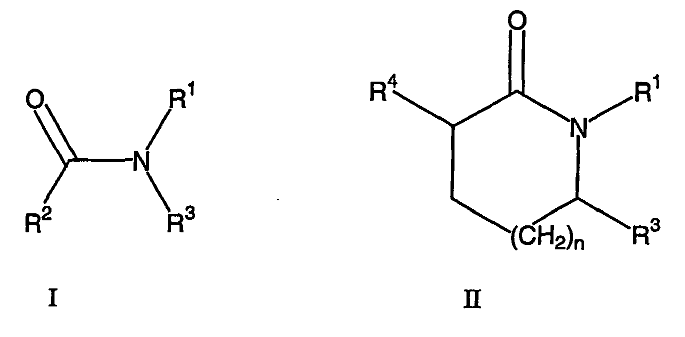 mit
R¹, R³, R⁴= H, linearer oder verzweigter, gesättigter oder ungesättigter C₁-C₁₈₋Alkylrest; C₅-C₈-Cycloalky, C₆-C₁₀-Aryl, C₇-C₁₂-Aralkyl; wobei die Gruppen R¹, R³ und R⁴ gleich oder verschieden voneinander sein können,
R²= linearer oder verzweigter, gesättigter oder ungesättigter C₁-C₁₈₋Alkylrest; C₅-C₈-Cycloalky, C₆-C₁₀-Aryl, C₇-C₁₂-Aralkyl,
n = 1 bis 3.

4. Verfahren nach einem der Ansprüche 1 bis 3, **dadurch gekennzeichnet, dass** man als Katalysator Essigsäureamid, Essigsäure-N-methylamid, Essigsäure-N,N'-dimethylamid, Propionsäure-N-ethylamid, Benzoesäure-N-methylamid, Benzoesäureamid, N-Methyl-ε-Caprolactam, 3-Ethyl-ε-Caprolactam, 3-Methyl-ε-Caprolactam, ε-Caprolactam, 7-Phenyl-ε-Caprolactam, 6-Aminohexen(-2)-säurelactam, 7-Aminoheptansäurelactam, omega-Capryllactam, delta-Valerolactam (2-Piperidinon), gamma-Butyrolactam, einsetzt.

5. Verfahren nach einem der Ansprüche 1 bis 4, **dadurch gekennzeichnet, dass** man als Katalysator Lactame von C₄-C₂₀-omega-Carbonsäuren einsetzt, insbesondere 4-Aminobutansäurelactam, 5-Aminopentansäurelactam, 6-Aminohexansäurelactam, 7-Aminoheptansäurelactam oder 8-Aminooctansäurelactam.

6. Verfahren nach einem der Ansprüche 1 bis 5, **dadurch gekennzeichnet, dass** die Monomerenkonzentration im hergestellten Polyurethan-Prepolymeren unter 0,3 Gew.-% liegt, bezogen auf das Gesamtgewicht des lösemittelfreien Polyurethan-Prepolymeren.

7. Verfahren nach einem der Ansprüche 1 bis 6, **dadurch gekennzeichnet, dass** die Viskosität des Polyurethan-Prepolymeren bei 100°C im Bereich von 100 mPas bis 15.000 mPas, bevorzugt 105 mPas bis 12.000 mPas und insbesondere bevorzugt 200 bis 10.000 mPas liegt (gemessen nach Brookfield, ISO 2555).

8. Verwendung eines nach einem der Ansprüche 1 bis 7 hergestellten Polyurethan-Prepolymeren mit endständigen Isocyanat-Gruppen zur Herstellung reaktiver ein- oder zweikomponentiger Kleb-/Dichtstoffe.

9. Verwendung nach Anspruch 8 zur Herstellung reaktiver Schmelzklebstoffe und lösemittelfreier oder lösemittelhaltiger Kaschierklebstoffe.

10. Verwendung eines nach einem der Ansprüche 1 bis 7 hergestelltem Polyurethan-Prepolymeren mit endständigen Isocyanat-Gruppen zur Herstellung von Montageschäumen, Vergussmassen sowie Weich-, Hart- und Integralschäumen.

## Claims

1. A method for producing polyurethane prepolymers having terminal isocyanate groups, which involves reacting polyisocyanates with polyols, and **characterized in that**
a) at least one asymmetric diisocyanate is used as polyisocyanate,
b) at least one polyol having an average molecular weight (Mₙ) of 60 to 3000 g/mol, preferably 100 to 2000 g/mol and more preferably 200 to 1200 g/mol is used as polyol,
c) the ratio of isocyanate groups to hydroxyl groups is set in the range between 1.1:1 to 4:1, preferably 1.2:1 to 2:1, more preferably 1.3:1 to 1.8:1 and very preferably 1.45:1 to 1.75:1,
and
d) at least one carboxamide is added as catalyst.

2. The method of claim 1, **characterized in that** as polyisocyanate at least one asymmetric diisocyanate selected from the group consisting of tolylene diisocyanate (TDI), either in isomerically pure form or as a mixture of two or more isomers, 1-isocyanatomethyl-3-isocyanato-1,5,5-trimethyl-cyclohexane (isophorone diisocyanate, IPDI), and 2,4-diphenylmethane diisocyanate is used.

3. The method of claim 1 or 2, **characterized in that** a carboxamide of the general formula I and/or II is used: 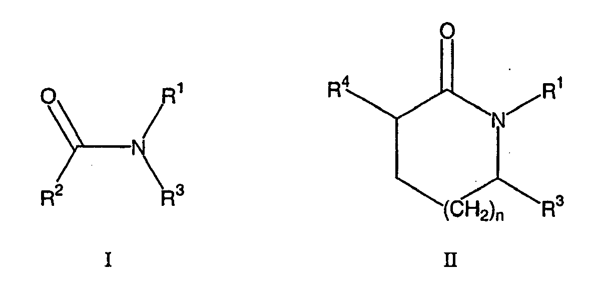 where
R¹, R³, R⁴ = H, linear or branched, saturated or unsaturated C₁-C₁₈ alkyl radical, C₅-C₈ cycloalkyl, C₆-C₁₀ aryl, C₇-C₁₂ aralkyl; where the groups R¹, R³ and R⁴ can be identical or different from one another,
R² = linear or branched, saturated or unsaturated C₁-C₁₈ alkyl radical; C₅-C₈ cycloalkyl, C₆-C₁₀ aryl, C₇-C₁₂ aralkyl,
n = 1 to 3.

4. The method of any one of claims 1 to 3, **characterized in that** use is made as catalyst of acetamide, N-methylacetamide, N,N'-dimethylacetamide, N-ethylpropionamide, N-methylbenzamide, benzamide (benzoic acid amide), N-methyl-ε-caprolactam, 3-ethyl-ε-caprolactam, 3-methyl-ε-caprolactam, ε-caprolactam, 7-phenyl-ε-caprolactam, 6-aminohex-2-enolactam, 7-aminoheptanolactam, omega-capryllactam, delta-valerolactam (2-piperidinone), gamma-butyrolactam.

5. The method of any one of claims 1 to 4, **characterized in that** use is made as catalyst of lactams of C₄-C₂₀ omega-carboxylic acids, especially 4-aminobutanolactam, 5-aminopentanolactam, 6-aminohexanolactam, 7-aminoheptanolactam or 8-aminooctanolactam.

6. The method of any one of claims 1 to 5, **characterized in that** the monomer concentration in the polyurethane prepolymer produced is below 0.3% by weight, based on the total weight of the solvent-free polyurethane prepolymer.

7. The method of any one of claims 1 to 6, **characterized in that** the viscosity of the polyurethane prepolymer at 100°C is in the range from 100 mPas to 15 000 mPas, preferably 105 mPas to 12 000 mPas, and more preferably 200 to 10 000 mPas (measured by Brookfield, ISO 2555).

8. The use of a polyurethane prepolymer containing terminal isocyanate groups, produced according to any one of claims 1 to 7, for producing reactive one- or two-component adhesives/sealants.

9. The use according to claim 8 for producing reactive hotmelt adhesives and solvent-free or solventborne laminating adhesives.

10. The use of a polyurethane prepolymer containing terminal isocyanate groups, produced according to any one of claims 1 to 7, for producing assembly foams, casting compounds, and flexible, rigid, and integral foams.

## Revendications

1. Procédé de préparation de prépolymères de polyuréthane comprenant des groupes isocyanate terminaux, dans lequel on fait réagir des polyisocyanates avec des polyols, **caractérisé en ce que**
a) comme polyisocyanate, on utilise au moins un diisocyanate asymétrique,
b) comme polyol, on utilise au moins un polyol ayant une masse moléculaire moyenne (Mₙ) de 60 à 3000 g/mole, de préférence de 100 à 2000 g/mole et de façon particulièrement préférée, de 200 à 1200 g/mole,
c) le rapport des groupes isocyanate aux groupes hydroxyle est compris dans la gamme de 1,1:1 à 4:1, de préférence de 1,2:1 à 2:1, en particulier, de 1,3:1 à 1,8:1 et de façon particulièrement préférée, de 1,45:1 à 1,75:1,
et
d) comme catalyseur, on ajoute au moins un amide d'acide carboxylique.

2. Procédé selon la revendication 1, **caractérisé en ce que** comme polyisocyanate, on utilise au moins un diisocyanate asymétrique choisi dans le groupe formé par le toluylènediisocyanate (TDI), sous forme d'isomère pur ou sous forme de mélange de plusieurs isomères ; le 1-isocyanatométhyl-3-isocyanato-1,5,5-triméthyl-diisocyanate (isophoronediisocyanate, IPDI) ; et le 2,4-diphénylméthanediisocyanate.

3. Procédé selon la revendication 1 ou 2, **caractérisé en ce que** l'on met en oeuvre un amide d'acide carboxylique de formule générale I et/ou II : 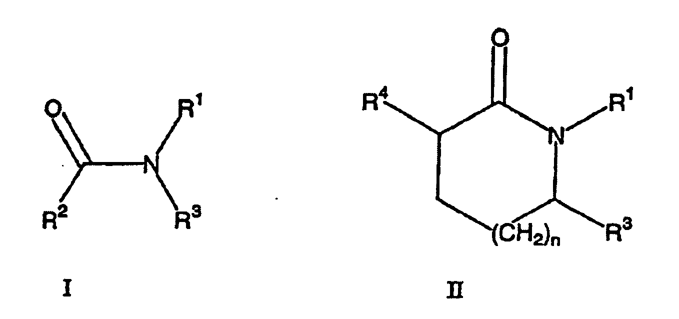 où
R¹, R³, R⁴= H, un groupe alkyle en C₁-C₁₈ linéaire ou ramifié, saturé ou insaturé ; un groupe cycloalkyle en C₅-C₈, aryle en C₆-C₁₀, aralkyle en C₇-C₁₂ ; les groupes R¹, R³ et R⁴ pouvant être identiques ou différents,
R²= un groupe alkyle en C₁-C₁₈ linéaire ou ramifié, saturé ou insaturé ; un groupe cycloalkyle en C₅-C₈, aryle en C₆-C₁₀, aralkyle en C₇-C₁₂,
n = 1 à 3.

4. Procédé selon l'une quelconque des revendications 1 à 3, **caractérisé en ce que** comme catalyseur, on utilise l'acétamide, le N-méthylacétamide, le N,N'-diméthylacétamide, le N-éthylpropionamide, le N-méthylamide d'acide benzoïque, l'amide d'acide benzoïque, le N-méthyl-ε-caprolactame, le 3-éthyl-ε-caprolactame, le 3-méthyl-ε-caprolactame, le ε-caprolactame, le 7-phényl-ε-caprolactame, le lactame d'acide 6-aminohexén-2-oïque, le lactame d'acide 7-aminoheptanoïque, l'omégacapryllactame, le delta-valérolactame (2-pipéridinone), le gammabutyrolactame.

5. Procédé selon l'une quelconque des revendications 1 à 4, **caractérisé en ce que** comme catalyseur, on utilise des lactames d'acides omégacarboxyliques en C₄-C₂₀, en particulier le lactame d'acide 4-aminobutanoïque, le lactame d'acide 5-aminopentanoïque, le lactame d'acide 6-aminohexanoïque, le lactame d'acide 7-aminoheptanoïque ou le lactame d'acide 8-aminooctanoïque.

6. Procédé selon l'une quelconque des revendications 1 à 5, **caractérisé en ce que** la concentration de monomères dans le prépolymère de polyuréthane obtenu est inférieure à 0,3 % en poids, par rapport au poids total du prépolymère de polyuréthane exempt de solvant.

7. Procédé selon l'une quelconque des revendications 1 à 6, **caractérisé en ce que** la viscosité du prépolymère de polyuréthane à 100°C est dans la gamme de 100 mPas à 15 000 mPas, de préférence de 105 mPas à 12 000 mPas et en particulier, de 200 à 10 000 mPas (mesurée selon Brookfield, ISO 2555).

8. Utilisation d'un prépolymère de polyuréthane comprenant des groupes isocyanate terminaux, préparé selon l'une quelconque des revendications 1 à 7, pour la préparation d'un produit adhésif/d'étanchéité réactif, à un ou deux composants.

9. Utilisation selon la revendication 8 pour la préparation de produits thermoadhésifs réactifs et d'adhésifs d'imprégnation contenant ou non du solvant.

10. Utilisation d'un prépolymère de polyuréthane comprenant des groupes isocyanate terminaux, préparé selon l'une quelconque des revendications 1 à 7, pour la préparation de produits expansés de montage, de masses de scellement ainsi que de mousses souples, dures et intégrales.
